# FASCICULE DE BREVET EUROPEEN

(11) **EP 0 572 305 B1**
(45) Date de publication et mention de la délivrance du brevet: **15.01.1997**
(21) Numéro de dépôt: 93401323.6
(22) Date de dépôt: 24.05.1993
(51) Int. Cl.: A23B 4/12, A22C 11/00

(54) **Procédé perfectionné de fabrication de saucissons secs**
Verbessertes Verfahren zur Herstellung von getrockneten Würsten
Improved process for making dry sausages

(30) Priorité: 26.05.1992 FR 9206437
(43) Date de publication de la demande: 01.12.1993
(73) Titulaire: Roquette Frères, F-62136 Lestrem (FR)
(72) Inventeur: Serpelloni, Michel, F-62660 Beuvry les Bethune (FR)
(74) Mandataire: Boulinguiez, Didier

(56) Documents cités:
- DE-A- 1 692 174
- JOURNAL OF FOOD PROTECTION vol. 40, no. 6, 1977, USA pages 398 - 401 J.C. ACTON, R.L. DICK
- CHEM.MIKROBIOL.TECHNOL.LEBENSM. vol. 9, 1986, pages 147 - 151 H. WEBER
- A.M. PEARSON : 'Processed Meats, 2nd Edition' 1984 , AVI , WESTPORT, USA Pages 259-262
- H.W. OCKERMAN : 'Sausage and Processed Meat Formulations' 1989 , AVI , NY, USA Pages 486-490

## Description

La présente invention concerne un procédé perfectionné de fabrication de saucissons secs mettant en oeuvre une fermentation lactique.

Traditionnellement, les saucissons secs auxquels on s'intéresse dans le cadre de la présente invention, sont préparés à partir de viande crue, éventuellement congelée, d'origine bovine, porcine, ovine ou aviaire.

La production de ce type de saucissons secs comprend essentiellement les étapes suivantes :
- préparation de la pâte par cutterage,
- addition d'un mélange d'ingrédients, d'additifs, de ferments lactiques et microcoques,
- mise en boyau,
- fermentation lactique,
- séchage,
- et éventuellement des étapes classiques de fumage, ensemencement par des moisissures de surface, enrobage ou autres.

Pour obtenir des saucissons de qualité satisfaisante, il est important que les matières premières soient fraîches et de faible contamination bactériologique. Malheureusement, ceci n'est pas toujours le cas, surtout en ce qui concerne les viandes d'origine aviaire.

Le pH est un bon indicateur de l'acceptabilité d'une viande pour la fabrication de saucissons secs. En général, et pour tous les types de viande, il est préférable que le pH soit au maximum de 6,2.

Le cutterage de la viande s'opère à basse température et la mise en boyau doit être généralement effectuée à une température maximale de - 4°C.

Durant l'étape de cutterage, on ajoute dans la pâte de viande outre les ferments lactiques, des microcoques, des sels (chlorure de sodium, nitrite, nitrate), de l'assaisonnement (épices), éventuellement des exhausteurs de goût du type glutamate de sodium, un anti-oxydant qui peut être de la vitamine C, et un substrat de croissance pour les ferments, qui est en général le glucose.

C'est au cours de l'étape de fermentation qui suit la mise en boyau de la pâte que se produit la fermentation lactique. Le principal métabolite issu de cette fermentation est bien entendu l'acide lactique qui intervient sur le plan organoleptique et qui permet par ailleurs la réduction du pH de la pâte. Ce facteur est essentiel pour obtenir une bonne stabilité bactériologique du saucisson ainsi qu'une couleur et une texture satisfaisantes. Ces ferments produisent en outre toute une série de substances anti-microbiennes qui inhibent les germes contaminants et les germes pathogènes.

En pratique, le pH initial de la pâte varie de 5,7 à 6,2 et le pH final qu'il convient d'atteindre après fermentation est situé entre 4,5 et 5,3 selon le type de saucisson.

Les ferments lactiques employés pour abaisser le pH de la pâte au cours de la maturation sont ordinairement des mélanges de lactobacilles et de pédiocoques qui sont des ferments à dominante acidifiante.

Ces derniers sont généralement associés à des ferments aromatisants, par exemple des microcoques et des moisissures de surface ainsi qu'à des levures qui assurent le développement d'un profil aromatique optimal dans le saucisson.

L'action de ces ferments se déroule au cours de l'étape de fermentation durant laquelle les saucissons sont stockés dans des conditions d'humidité et de température contrôlées pendant quelques heures à plusieurs jours. Au cours de la fermentation, la température évolue de 22-24°C à 16°C et l'humidité relative de 95 à 75 %.

Après fermentation, les saucissons sont séchés. Cette étape dure de quelques jours à quelques semaines dans des conditions de température et d'humidité relative également contrôlées. La température de ce séchage est généralement comprise entre 15 et 20°C tandis que l'humidité relative est comprise dans des valeurs variant de 65 à 80 %.

C'est à la fin de la fermentation et au début de l'étape de séchage que commence le développement de la couleur rouge caractéristique du saucisson sec. Celle-ci résulte de la transformation des nitrates en nitrites puis en oxyde nitrique, ce dernier composé réagissant avec la myoglobine de la viande pour former la nitrosomyoglobine rouge qui sera transformée en nitrosomyochromogène dans des conditions acides.

Cette couleur rouge et sa stabilité dans le temps constituent des critères importants pour l'appréciation de la qualité d'un saucisson sec.

Les saucissons secs obtenus selon un tel procédé sont par exemple les saucissons de porc, les saucissons de boeuf, le salami, le chorizzo, les saucissons de dinde.

L'un des problèmes cruciaux auxquels doit faire face le fabricant de saucissons est la contamination des viandes par des germes banals halotolérants, souvent pourvus d'activité protéolytique, ou pire encore par des germes pathogènes tels que les staphylocoques dorés ou les entérobactéries. Les bactéries protéolytiques halotolérantes dégradent les protéines des viandes en produisant des métabolites défavorables sur le plan organoleptique, et les germes pathogènes qui secrètent des toxines particulièrement agressives sont capables de se développer accidentellement au début du procédé de fabrication lorsque les ferments utiles sont en phase de latence. Ces germes pathogènes secrètent alors des entérotoxines qui ne seront pas dégradées ultérieurement ni par la flore lactique ni par d'éventuels traitements thermiques. Ces entérotoxines sont à l'origine de toxiinfections alimentaires qui peuvent être graves, même si les bactéries qui en sont à l'origine peuvent avoir disparu ou avoir été tuées par l'acidité ou les substances anti-microbiennes secrétées par les ferments utiles.

Dans certains cas, et c'est notamment le cas des viandes d'origine aviaire, plus maigres que celles de porc ou de boeuf, les conditions initiales de pH et d'activité de l'eau ne sont pas suffisamment basses pour prévenir le développement de ces microorganismes protéolytiques ou pathogènes qui, contrairement aux ferments lactiques et aux ferments aromatisants tels que les moisissures de surface, ne peuvent pas croître aux pH acides.

Les producteurs de saucissons ont souvent des difficultés pour s'approvisionner en viandes de contamination microbienne suffisamment basse, et ceci est encore plus vrai lorsqu'il s'agit de viande de volaille telle que la viande de dinde. Ces viandes de piètre qualité microbiologique ont souvent des pH élevés, supérieurs à 5,7. Ces valeurs de pH élevées augmentent les risques de multiplication des bactéries protéolytiques et même pathogènes pendant la première phase de la fermentation. Il s'ensuit que certains saucissons doivent souvent être déclassés non seulement pour des raisons d'appétence mais parce qu'ils risquent en plus d'être dangereux pour le consommateur.

Il est clair que pour des raisons pratiques et économiques, les producteurs ne peuvent procéder à l'analyse bactériologique de toutes les viandes qu'ils emploient, ni procéder à un contrôle systématique des pH des pièces de viande qu'ils utilisent afin de s'assurer de leur qualité, ni contrôler chaque lot de production pour ce qui concerne un développement accidentel de bactéries pathogènes.

Il est certain que les mesures d'hygiène et de salubrité qui se sont largement répandues dans les entreprises alimentaires ont grandement contribué à l'amélioration microbiologique des viandes mais il n'en demeure pas moins vrai que malgré toutes les précautions prises, le risque d'incident ne peut être complètement supprimé, surtout en ce qui concerne les produits fermentés.

Il importait donc aux producteurs de saucissons secs de mettre au point un procédé leur permettant d'obtenir sans coup férir et ce, même avec des viandes dont la qualité microbiologique n'est pas optimale, et en particulier avec des viandes dont le pH est supérieur à 5,7, des produits présentant cependant toutes les qualités qu'on attend d'un saucisson sec tant au point de vue de sa saveur que de son arôme, de sa couleur et de sa texture.

Il est bien connu que la croissance des bactéries protéolytiques constituant la microflore banale de la viande peut être ralentie par une diminution de pH. Ceci est également le cas pour la croissance des germes pathogènes tels que certains staphylocoques dorés et certaines entérobactéries. Il est donc important que la croissance de tels germes pathogènes soit inhibée étant donné que les saucissons ne sont pas des produits qui sont soumis avant leur vente à des traitements thermiques permettant de détruire ces germes. On a donc préconisé pour ces raisons de prévoir une acidification rapide (de 12 à 18 heures) des saucissons durant leur phase de fermentation, ceci pour empêcher le développement de la flore protéolytique ou pathogène.

Toutefois, le fabricant de saucissons ne peut pas remédier aux contaminations des viandes par des germes protéolytiques ou pathogènes en inoculant des quantités massives de ferments susceptibles d'occuper rapidement le terrain et de prévenir ainsi la croissance de ces bactéries indésirables. Ceci engendrerait en effet un coût prohibitif en ferments et ne rendrait pas de toute façon leur croissance moins aléatoire durant la première phase de fermentation.

On a même tenté pour supprimer ces risques dus à la croissance de bactéries protéolytiques ou pathogènes de mettre en oeuvre une acidification rapide dans laquelle l'acidification lactique naturelle occasionnée par les ferments est totalement remplacée par une acidification chimique, et ce à l'aide de glucono-delta-lactone, ci-après dénommée GDL.

Si l'effet obtenu sur l'arrêt de la croissance des bactéries protéolytiques et pathogènes s'avère radical, les résultats obtenus sont cependant très décevants sur le plan technologique et organoleptique. Il en résulte que cette technique n'a pu prospérer pour l'obtention de produits de qualité.

On a donc vu apparaître des procédés de fabrication de saucissons secs reposant sur l'emploi combiné de ferments lactiques et de GDL. On se référera par exemple à la page 16 d'un document intitulé "Effect of bacterial inoculations on characteristics and microbiol flora of dry sausage" ESKO NURMI - Acta agr. alla fennica - n° 108 - 1966.

Il est indiqué dans ce document que l'addition de GDL combinée à celle de ferments :
- permet la réduction de la durée de fabrication des saucissons,
- limite l'activité des germes pathogènes,
- crée des conditions favorables pour la prédominance rapide des flores de lactobacillus et de levures,
- permet le développement de la consistance désirée dans le saucisson de façon plus rapide,
- mais confère un goût désagréable au saucisson.

Le document intitulé "Salmonellen in frischen Mottwürsion" Udo SCHMIDT Institut für Mikrobiologie, Toxikologie und Histologie der Bundesanstalt für Fleischwirtsch 67(6) - 1987 - p. 664-714, le document intitulé "Effect of pH and Oxygen Tension on Staphylococcal Growth and Enterotoxin Formation in Fermented Sausage" L.E. BARBER and R.H. DEIBEL Applied Microbiology, Dec. 1972, p. 891-898, le document intitulé "Starter cultures for dry sausages and raw ham Composition and effect" Friedrich-karl LUCKE and Hangsgeorg HECHELMANN Institute of Microbiology, Toxicology and Histology of the Federal Meat Research Institute, Kulmbach, Fleischwirtsch 67(3) - 1987 - p. 307-314, le document intitulé "Inhibiting salmonellae growth in fresh, spreadable Mettwurst (dry sausage eaten relatively fresh) made without sugar" Ulrich SCHILLINGER and Friedrich K. LUCKE Institute of Microbiology, Toxicology and Histology of the Federal Meat Research Institute, Kulmbach Fleischwirtsch 69(5) - 1989 - p. 879-882, ainsi que le document intitulé "Starter Kulturen und Glucono-delta-lactone (GDL) bei der Rohwurstherstellung". European meeting of meat research workers F.P. NHNIVAARA 1977 - Vol. 1 - p. 274-288, décrivent également l'utilisation conjointe de ferments et de GDL dans la fabrication de saucissons. Le document intitulé "Rohwurstherstellung mit Starterkulturen im Handwerkbetrieb-Entwicklungsstand und Tendenzen", H. WEBER, Chem. Mikrobiol. Technol. Lebensm. 9, 147-151, 1986, décrit un procédé de fabrication de salamis secs préconisant l'utilisation de la GDL pour diminuer le pH dans la viande à traiter en début de fermentation ainsi qu'une variante dudit procédé consistant à faire précéder l'étape de fermentation réalisée à une température de 22-24°C par une étape de maturation faite à une température de 8°C. Le document intitulé "Cured Pigment and Color Development in Fermented Sausage Containing Glucono-Delta-Lactone", J.C. ACTON et R.L. DICK, Journal of Food Protection, Vol. 40, No. 6, 398-401, 1977, décrit un procédé de fabrication de saucisses fermentées consistant en une acidification directe de la viande par ajout de GDL puis en une fermentation lactique classique. Il ressort de ces documents que cette façon de procéder permet d'inhiber la croissance des pathogènes en baissant rapidement le pH et en favorisant ainsi l'occupation du terrain par les starters lactiques.

Il est toutefois à noter que le document intitulé "Production of Italian Dry Salami : Effect of starter culture and chemical acidulation on staphylococcal growth in salami under commercial manufacturing conditions". J. METAXOPOULOS - C. GENNIGEORGIS - MJ FANELLI - C. FRANTI AND E. COSMA. Applied and Environnemental Microbiology Nov. 1981 - p. 863-871, qui divulgue l'utilisation de GDL et de "starters", montre que, non seulement les staphylocoques, mais également les ferments lactiques et les microcoques, peuvent être inhibés par de fortes teneurs en GDL (voir ce document, p. 866 - col. 1 et 2). Ces résultats sont expliqués par des variations de la flore naturelle des différents types de saucissons concernés et par les quantités de GDL mises en oeuvre.

Une recommandation quant à la limitation de la quantité de GDL à employer, figure également dans le document NIINIVAARA précédemment cité. Il y est également fait mention de cet effet inhibiteur dans le cas où le pH atteint un niveau trop bas (< 5,0). D'après ce document, le seuil maximal en GDL se justifie aussi par une autre raison qui est le développement d'un goût acide désagréable dans les saucissons. Il est conseillé en outre de prévoir une température de fermentation / séchage inférieure à 22°C.

Plusieurs solutions ont été proposées pour remédier à ce problème organoleptique. Ainsi, KNEISSLER (Chem. Mikrobiol. Technol. Lebensm. 10, 82-85, 1986) a démontré que c'est la dégradation de la GDL par les ferments lactiques qui est à l'origine de la production d'acide acétique, cet acide conférant une saveur rédhibitoire au saucisson. Il a également indiqué que cette dégradation dépend de la nature de la souche impliquée. Il suffirait donc de choisir des souches ne métabolisant pas la GDL. Mais de telles souches ne possèdent pas forcément les qualités d'acidification ou de fermentation requises pour obtenir un produit de qualité.

Dans le document SCHILLINGER précédemment cité, il a d'autre part été conseillé de stocker les saucissons comprenant GDL et ferments à une température inférieure à 10°C pour éviter la dégradation de la GDL résiduelle, après maturation à 20°C. Mais cette procédure n'est évidemment pas satisfaisante.

Aucune technique ne permet donc à l'heure actuelle de supprimer les inconvénients liés à l'emploi de la GDL dans la fabrication des saucissons secs, et ce malgré l'impact extrêmement favorable de ce produit sur la qualité bactériologique des saucissons obtenus, étant donné que cet emploi n'est pas compatible avec l'obtention de saucissons satisfaisants sur le plan organoleptique.

Or, il est du mérite de la Société Demanderesse d'avoir vaincu ce préjugé défavorable et d'avoir réussi à mettre au point, après de nombreuses et laborieuses recherches, un procédé de fabrication de saucissons secs à l'aide de GDL et de ferments lactiques, permettant de minimiser fortement les risques de contamination des saucissons secs par les germes protéolytiques et pathogènes, sans nuire toutefois aux qualités organoleptiques du produit obtenu.

Le procédé de fabrication de saucissons secs conforme à l'invention consiste ainsi à mesurer le pH de la pâte de viande de départ, à en déduire la quantité de GDL à y ajouter de façon à atteindre, après hydrolyse de cette GDL et avant fermentation, un pH compris entre environ 5,35 et environ 5.65, à mélanger à la pâte de viande ladite quantité de GDL requise, et enfin à pratiquer, juste avant la fermentation, une étape de stockage du saucisson à une température inférieure ou égale à 4°C, de préférence comprise entre 0 et 4°C, de préférence pendant une durée variant d'environ 12 à 18 heures. Pendant cette période, la GDL s'hydrolyse en acide gluconique, ce qui amène l'abaissement du pH, et cette période est également mise à profit pour permettre aux ingrédients et additifs de migrer et de se dissoudre ou de se répartir de façon homogène dans la pâte.

La présente invention concerne donc un procédé de fabrication de saucissons secs mettant en oeuvre des ferments lactiques et de la GDL et comprenant les étapes suivantes :
- préparation de la pâte de viande par cutterage,
- addition d'un mélange d'ingrédients, d'additifs et de ferments lactiques,
- mise en boyau,
- fermentation,
- éventuellement des étapes traditionnelles de fumage, d'ensemencement de surface des saucissons par des moisissures ou levures d'enrobage,
caractérisé en ce qu'on réalise, après l'étape de mise en boyau et avant l'étape de fermentation, une étape de stockage au froid du saucisson à une température inférieure ou égale à 4°C afin de permettre l'hydrolyse de la GDL, la quantité de GDL ajoutée étant déterminée en mesurant le pH de la pâte de viande de départ et en calculant d'après cette mesure la quantité de Glucono-Delta-Lactone (GDL) telle qu'après l'étape de stockage au froid et hydrolyse, et avant l'étape de fermentation, le pH de la pâte soit compris entre 5.35 et 5.65.

L'ajout de GDL permet de diminuer de manière fiable et contrôlée le pH initial de la pâte, qui peut être aussi élevé que 6,2, jusqu'à une valeur comprise entre environ 5,35 et environ 5,65.

De cette manière, le risque de développement de bactéries protéolytiques et pathogènes, contaminants banals des viandes, est radicalement supprimé même lorsque le pH initial des viandes est élevé. Le fabricant de saucissons est ainsi assuré d'une qualité microbiologique constante et régulière de ses produits. Ceci constitue une sécurité appréciable lorsque l'on sait qu'un seul accident peut engendrer des pertes très conséquentes.

Par ailleurs, cette "maturation froide", qui permet une acidification de la pâte jusqu'à un pH d'environ 5,35 à environ 5,65 sans permettre aux germes pathogènes ou protéolytiques de se multiplier, offre par la suite un milieu permettant une croissance optimale des bactéries lactiques homofermentatives contenues dans les ferments.

On a d'autre part remarqué que l'existence de cette phase de "maturation froide" permettait d'éliminer les inconvénients occasionnés par la GDL au point de vue du mauvais goût des saucissons constaté lorsqu'on n'utilise pas cette phase de "maturation froide".

Le procédé selon l'invention permet d'obtenir en outre une seccabilité améliorée des saucissons ainsi qu'une coloration rouge franche et stable. En outre, ces phénomènes apparaissent très rapidement.

Le procédé selon l'invention permet donc d'obtenir, et ce même avec des viandes de pH élevé et fort contaminées, en toute sécurité, des saucissons d'une grande qualité ne présentant pas de défauts organoleptiques rédhibitoires. Les saucissons obtenus par le procédé selon l'invention ont en effet une seccabilité, une couleur, une flaveur, un goût, nettement meilleurs que ceux des saucissons déjà obtenus avec de la GDL mais n'ayant pas subi d'étape de "maturation froide" en présence de cette GDL, qu'ils aient été fabriqués avec ou sans flore microbienne ajoutée, et nettement meilleurs que ceux obtenus de façon traditionnelle sans addition de GDL avant la fermentation lactique.

La Société Demanderesse ne possède pas d'explication à ce phénomène qu'elle a mis en évidence, d'autant plus qu'il ne tombait pas particulièrement sous le sens de mettre en oeuvre cette étape particulière, coûteuse en temps et en énergie mais cependant très intéressante au point de vue de ses répercussions éminemment favorables tant sur le plan des risques de contamination que sur celui du goût des saucissons ainsi obtenus.

Ce phénomène est d'autant plus surprenant que l'emploi, conformément à l'invention, d'une étape de maturation à température basse, peu favorable bien sûr à la croissance des germes protéolytiques ou pathogènes, ne l'est pas non plus pour la croissance des ferments lactiques. On aurait donc pu craindre a priori que ces conditions se révèlent néfastes pour les ferments et en particulier pour leur capacité à se développer de façon prépondérante lors du retour à la température de fermentation.

Enfin, ce n'est certes pas la réputation peu flatteuse des produits de charcuterie obtenus jusqu'alors à l'aide de GDL qui aurait pu conduire l'homme du métier à surmonter ses doutes et ses réticences dans une éventuelle démarche lui permettant de parvenir à l'invention.

D'autres avantages découlant du procédé selon l'invention résident dans le pH final relativement bas du saucisson qui est obtenu à l'aide du procédé.

Un tel pH relativement bas, qui n'est toutefois pas corrélé à une perception intense d'acidité, permet en effet de tolérer une teneur en eau plus importante des saucissons, c'est-à-dire un séchage réduit, sans influencer pour autant leur stabilité à la conservation. Il en résulte une économie de séchage et un gain en poids corrélatif qui, joints à l'absence de produits à déclasser, se traduisent par une économie non négligeable sur les coûts de production.

Le procédé selon l'invention trouve en outre une application tout à fait intéressante et avantageuse dans le cas de la fabrication de saucissons allégés en matière grasse. Du fait de leur forte teneur en eau, ces produits obtenus par des procédés traditionnels doivent en effet être additionnés de quantités importantes de sel, ceci afin de maintenir l'activité de l'eau à un niveau acceptable permettant la conservation du saucisson. Le goût très salé de ce type de saucissons les rendait difficilement acceptables. Le procédé selon l'invention permet de s'affranchir de l'emploi de grandes quantités de sel dans la fabrication de ce type de saucissons, leur pH plus bas mais sans caractère organoleptique désagréable leur permettant d'assurer une fermentation et une conservation correctes en l'absence de quantités excessives de sel.

Compte tenu de la cinétique d'acidification de la mêlée à la température de stockage avant maturation, et connaissant le pH initial de la mêlée et celui à atteindre avant maturation, l'homme du métier peut aisément déterminer la quantité de GDL à ajouter à la pâte, sachant qu'un gramme de GDL par kilo de mêlée permet d'abaisser le pH de la mêlée de 0,1 unité environ. Selon une variante avantageuse de l'invention, la GDL est ajoutée à la pâte en même temps que le mélange d'ingrédients d'additifs et de ferments. Il est toutefois généralement préférable de n'ajouter la GDL à la pâte que juste avant la mise en boyau. Ceci évite toute gélification prématurée de cette pâte rendant la suite des opérations plus délicate.

En ce qui concerne la matière première à employer, elle dépend bien entendu du type de saucisson considéré. Il peut s'agir de viande de porc, de boeuf, de mouton, de volaille, employées seules ou en mélange. On associe de préférence du gras à du maigre de viande dans des proportions qui sont respectivement et plus préférentiellement de un tiers et deux tiers environ, mais qui peuvent être de un cinquième à quatre cinquièmes dans le cas plus particulier des saucissons de volaille.

Conformément à une disposition avantageuse mais non limitative de l'invention, on ajoute à la mêlée des nitrates et/ou des nitrites sous forme de sel nitrité à une concentration de 0,01 à 0,02 % et éventuellement au moins un agent anti-oxydant tel que l'acide ascorbique et ce à raison de 0,01 à 0,1 % en poids, ainsi que des épices telles que le poivre.

Les ferments lactiques acidifiants sont de préférence choisis parmi les espèces suivantes : lactobacilles, pédiocoques.

Les ferments aromatisants sont choisis notamment parmi les microcoques, les staphylocoques, les levures et les actynomycètes.

A titre d'exemple, on peut citer les ferments du type DUPLOFERMENTS commercialisés par la Société R. MULLER.

La GDL employée se présente avantageusement sous la forme de poudre cristalline.

A titre d'exemple, on peut citer celle commercialisée sous la marque déposée LYSACTONE par la Société Demanderesse.

La GDL est ajoutée à la pate avant fermentation, simultanément ou non au mélange d'ingrédients d'additifs et de ferments, mais de préférence juste avant la mise en boyau.

L'étape de stockage du saucisson ou de "maturation froide" à une température inférieure ou égale à 4°C intervient avant la fermentation, de préférence juste après la mise en boyau.

La durée de cette étape de "maturation froide" est avantageusement comprise entre 10 et 18 heures. Dans la pratique, cela correspond à une nuit.

Les conditions de fermentation et de séchage dépendent du type de fabrication considérée et des ferments mis en oeuvre.

Ces conditions sont conformes à celles communément employées dans ce domaine technologique. Elles ont été rappelées sommairement ci-dessus.

Les étapes facultatives qui peuvent être intégrées au procédé selon l'invention peuvent par exemple être les suivantes :
- le fumage,
- l'ensemencement de surface avec des moisissures,
- l'enrobage avec des épices.

L'invention sera mieux comprise à l'aide de l'exemple comparatif qui suit, qui comporte la description d'un mode de mise en oeuvre avantageux du procédé selon l'invention.

### EXEMPLE

A une base carnée et grasse composée de 80 % de viande de dinde et de 20 % de graisse de porc, on a ajouté au moment du cutterage effectué à une température de - 4°C, 3 % de sel nitrité, 1 % de dextrose (glucose cristallisé), des épices (poivre, noix muscade) et un starter composé de ferments lactiques et de microcoques.

Une partie de cette pâte a été embossée directement sans addition de GDL avant d'être soumise à la "maturation froide".

A une autre partie de cette pâte, on a ajouté 0,4 % de GDL immédiatement avant l'embossage. Les saucissons ainsi formés avec ou sans GDL ont été soumis à la "maturation froide" durant 18 heures à 3°C puis ont été transférés dans les chambres de fermentation durant 4 jours et ont ensuite été séchés durant 10 jours.

On a dénombré au cours de ces quatorze jours les bactéries lactiques, les entérobactéries et les staphylocoques dorés dans les deux types de saucissons.

Ces résultats figurent dans les tableaux et graphiques joints.

Les bactéries lactiques ont été dénombrées par comptage des colonies apparaissant sur un milieu MRS agar après 3 jours d'incubation à 30°C en anaérobiose.

Les entérobactéries ont été dénombrées sur milieu VRBG agar après 24 heures d'incubation aérobie à 30°C.

Les staphylocoques dorés ont été dénombrés quant à eux sur milieu de Baird et Parker après 2 jours d'incubation aérobie à 37°C.

On constate que la GDL a empêché radicalement la multiplication des entérobactéries et des staphylocoques dorés, prévenant ainsi la secrétion des entérotoxines dangereuses et la présence de bactéries pathogènes qui sont à l'origine des toxiinfections alimentaires.

On constate également que la GDL a permis une multiplication bien plus abondante des ferments lactiques dont le nombre se trouve quadruplé par rapport au témoin sans GDL.

Après fermentation, ces saucissons ont été séchés et un panel de dégustateurs a trouvé que les saucissons obtenus par le procédé selon l'invention étaient moins acides bien qu'ayant un pH égal aux saucissons témoins, qu'ils avaient un meilleur goût et que la stabilité de leur couleur était bien meilleure.

**TABLEAU I**

| Echantillon : Saucisson sec de dinde sand GDL, ayant subi une "maturation froide" de ± 18 heures à 3°C | | | | |
|---|---|---|---|---|
| | Bact.lact. /g | Entérobact. /g | S.dorés /g | pH |
| (1)pâte | 5.100.000 | 1.000 | 100 | 6,06 |
| (2)18H à 3°C | 7.100.000 | 30.000 | 100 | 5,97 |
| (3)après 1 j. | 47.000.000 | 100 | 200 | 4,64 |
| (4)après 2 j. | 153.000.000 | < 10 | < 100 | 4,62 |
| (5)après 3 j. | 111.000.000 | < 10 | < 100 | 4,68 |
| (6)après 5 j. | 118.000.000 | < 10 | < 100 | 4,67 |
| (7)après 7 j. | 170.000.000 | < 10 | < 100 | 4,65 |
| (8)après 10j. | 150.000.000 | < 10 | < 100 | 4,63 |
| (9)après 14j. | 79.000.000 | < 10 | < 100 | 4,64 |

**TABLEAU II**

| Echantillon : Saucisson sec de dinde avec GDL, ayant subi une "maturation froide" de ± 18 heures à 3°C | | | | |
|---|---|---|---|---|
| | Bact.lact. /g | Entérobact. /g | S.dorés /g | pH |
| (1)pâte | 5.100.000 | 1.000 | 100 | 6,06 |
| (2)18H à 3°C | 12.000.000 | < 10 | < 100 | 5,59 |
| (3)après 1 j. | 130.000.000 | < 10 | < 100 | 4,66 |
| (4)après 2 j. | 200.000.000 | < 10 | < 100 | 4,58 |
| (5)après 3 j. | 530.000.000 | < 10 | < 100 | 4,65 |
| (6)après 5 j. | 160.000.000 | < 10 | < 100 | 4,62 |
| (7)après 7 j. | 230.000.000 | < 10 | < 100 | 4,64 |
| (8)après 10j. | 180.000.000 | < 10 | < 100 | 4,63 |

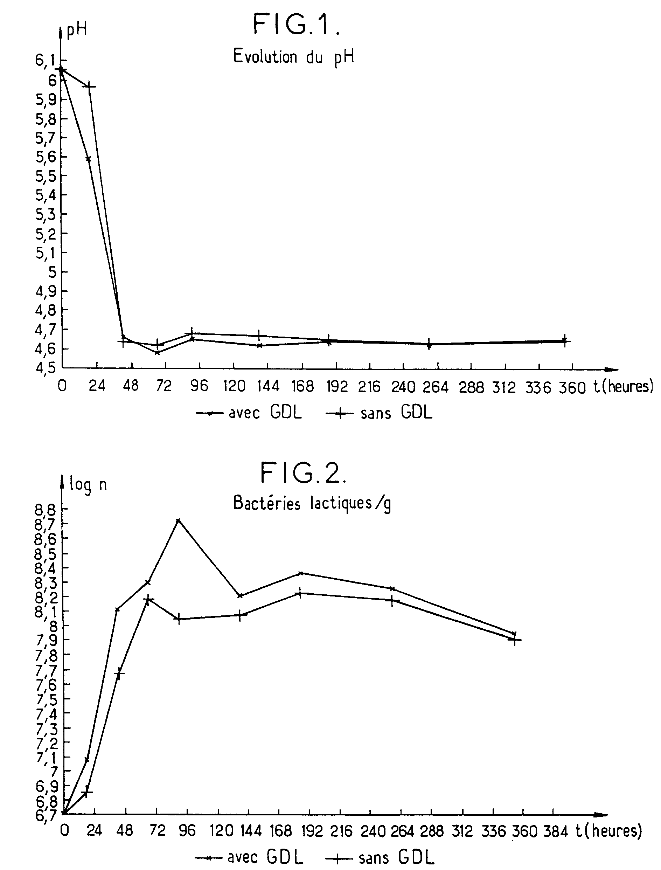

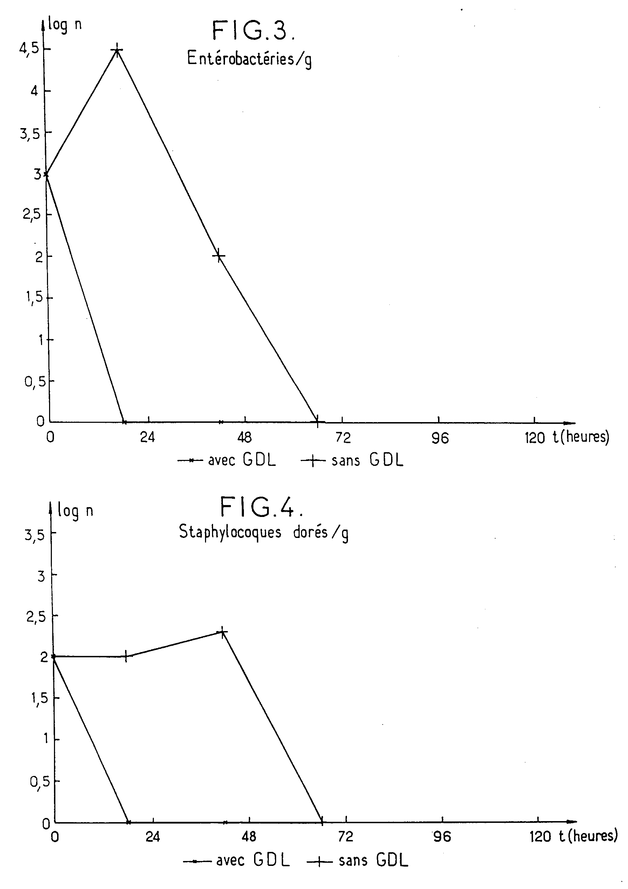

Les figures 1 à 4 représentent respectivement l'évolution du pH, des bactéries lactiques, des entérobactéries et des staphylocoques dorés en fonction du temps.

## Revendications

1. Procédé de fabrication de saucissons secs mettant en oeuvre des ferments lactiques et de la Glucono-Delta-Lactone (GDL) et comprenant :
- une étape de préparation de la pâte de viande par cutterage,
- une étape d'addition d'un mélange d'ingrédients, d'additifs, de ferments lactiques et de Glucono-Delta-Lactone (GDL),
- une étape de mise en boyau,
- une étape de fermentation,
- eventuellement des étapes traditionnelles de fumage, d'ensemencement de surface des saucissons par des moisissures ou levures d'enrobage,
caractérisé en ce qu'on réalise, après l'étape de mise en boyau et avant l'étape de fermentation, une étape de stockage au froid du saucisson à une température inférieure ou égale à 4°C afin de permettre l'hydrolyse de la GDL, la quantité de GDL ajoutée étant déterminée en mesurant le pH de la pâte de viande de départ et en calculant d'après cette mesure la quantité de Glucono-Delta-Lactone (GDL) telle qu'après l'étape de stockage au froid et hydrolyse, et avant l'étape de fermentation, le pH de la pâte soit compris entre 5.35 et 5.65.

2. Procédé selon la revendication 1, caractérisé par le fait que l'étape de stockage au froid du saucisson est réalisée à une température comprise entre 0 et 4°C.

3. Procédé selon l'une ou l'autre des revendications 1 et 2, caractérisé par le fait que l'étape de stockage au froid du saucisson a une durée variant de 12 à 18 heures.

4. Procédé selon l'une quelconque des revendications 1 à 3, caractérisé par le fait que l'on ajoute à la mêlée des nitrates et/ou des nitrites sous forme de sel nitrité à une concentration de 0.01 à 0.02 % et éventuellement au moins un agent anti-oxydant tel que l'acide ascorbique, à raison de 0.01 à 0.1 % en poids.

5. Procédé selon l'une quelconque des revendications 1 à 4, caractérisé par le fait que la GDL est utilisée sous forme de poudre cristalline.

6. Procédé selon la revendication 5, caractérisé par le fait que la quantité de GDL ajoutée afin d'abaisser d'environ 0,1 unité le pH de la mêlée est d'environ 1g par kg de mêlée.

7. Procédé selon l'une quelconque des revendications 1 à 6, caractérisé par le fait que la GDL est ajoutée à la pâte juste avant la mise en boyau.

## Claims

1. Process for manufacturing dry sausages using lactic ferments and Glucono-Delta-Lactone (GDL) and comprising:
- a stage in which meat comminute is prepared by comminution,
- a stage in which a blend of ingredients, additives, lactic ferments and Glucono-Delta-Lactone (GDL) is added,
- a stage in which the blend is put into a casing,
- a fermentation stage,
- optionally, traditional stages of smoking and seeding the surface of the sausages with moulds or coating yeasts,
characterized in that, after putting the blend in the casing and before the fermentation stage, a stage is carried out in which the sausage is stored cold at a temperature of less than or equal to 4°C so as to allow hydrolysis of the GDL to take place, the quantity of GDL added being determined by measuring the pH of the starting meat comminute and by calculating from this measurement the quantity of Glucono-Delta-Lactone (GDL) such that after cold storage and hydrolysis, and before the fermentation stage, the pH of the comminute is between 5.35 and 5.65.

2. Process according to claim 1, characterized in that the stage in which the sausage is stored cold is carried out at a temperature of between 0°C and 4°C.

3. Process according to one or other of claims 1 and 2, characterized in that the stage in which the sausage is stored cold lasts from 12 to 18 hours.

4. Process according to any one of claims 1 to 3, characterized in that nitrates and/or nitrites in the form of a nitrite-containing salt, are added to the blend at a concentration of 0.01 to 0.02 % and possibly at least one anti-oxidant agent is added such as ascorbic acid, at the rate of 0.01 to 0.1 % by weight.

5. Process according to any one of claims 1 to 4, characterized in that GDL is used in the form of a crystalline powder.

6. Process according to claim 5, characterized in that the quantity of GDL added in order to reduce the pH of the blend by about 0.1 of a unit is about 1 g per kg of blend.

7. Process according to any one of claims 1 to 6, characterized in that GDL is added to the comminute just before the comminute is put into the casing.

## Patentansprüche

1. Verfahren zur Herstellung von Dauerwürsten unter Verwendung von Milchsäurefermenten und Glucono-Delta-Lacton (GDL) und umfassend:
- eine Stufe der Herstellung der Fleischpaste durch Kuttern,
- eine Stufe der Zugabe eines Gemisches aus Inhaltsstoffen, Additiven, Milchsäurefermenten und Glucono-Delta-Lacton (GDL),
- eine Stufe des Einfüllens in einen Darm,
- eine Stufe der Fermentation,
- gegebenenfalls herkömmliche Stufen der Räucherung, der Austrocknung der Oberfläche der Würste durch Schimmelpilze oder Hefen auf der Umhüllung,
dadurch **gekennzeichnet,** daß man nach der Stufe des Einfüllens in einem Darm und vor der Fermentationsstufe eine Stufe der Lagerung der Würste in der Kälte bei einer Temperatur von kleiner oder gleich 4°C durchführt, um die Hydrolyse von GDL zu erlauben, wobei die Menge des zugesetzten GDLs durch Messen des pH-Werts der Fleischpaste zu Beginn und durch Berechnen der Menge des Glucono-Delta-Lactons (GDL) gemäß dieser Messung so, daß nach der Trocknungsstufe in der Kälte und der Hydrolyse und vor der Fermentationsstufe der pH-Wert der Paste zwischen 5,35 und 5,65 liegt, bestimmt wird.

2. Verfahren nach Anspruch 1, dadurch **gekennzeichnet,** daß man die Stufe der Kältelagerung der Wurst bei einer Temperatur zwischen 0 und 4°C durchführt.

3. Verfahren nach einem der Ansprüche 1 oder 2, dadurch **gekennzeichnet,** daß die Stufe der Kältelagerung der Wurst eine Dauer, die von 12 bis 18 Stunden variiert, besitzt.

4. Verfahren nach einem der Ansprüche 1 bis 3, dadurch **gekennzeichnet,** daß man dem Gemisch Nitrate und/oder Nitrite in Form von Nitritsalzen in einer Konzentration von 0,01 bis 0,02% und gegebenenfalls mindestens ein Antioxidationsmittel, wie Ascorbinsäure, in einer Menge von 0,01 bis 0,1 Gew.-% zusetzt.

5. Verfahren nach einem der Ansprüche 1 bis 4, dadurch **gekennzeichnet,** daß das GDL in Form eines kristallinen Pulvers verwendet wird.

6. Verfahren nach Anspruch 5, dadurch **gekennzeichnet,** daß die Menge an zugesetztem GDL zur Erniedrigung des pH-Werts des Gemisches um etwa 0,1 Einheiten etwa 1 g pro kg Gemisch beträgt.

7. Verfahren nach einem der Ansprüche 1 bis 6, dadurch **gekennzeichnet,** daß das GDL der Paste kurz vor dem Einfüllen in den Darm zugesetzt wird.
